# EUROPEAN PATENT APPLICATION

(11) **EP 4 618 619 A1**
(43) Date of publication of application: **17.09.2025**
(21) Application number: 23888484.5
(22) Date of filing: 24.10.2023
(51) Int. Cl.: H04W 28/16, H04W 24/10, H04W 72/0453, H04W 84/12, H04W 92/20

(54) **ACCESS POINT DEVICE, CONTROL METHOD, AND PROGRAM**

(30) Priority: 07.11.2022 JP 2022178313
(71) Applicant: CANON KABUSHIKI KAISHA, Tokyo 146-8501 (JP)
(72) Inventor: INOHIZA Hirohiko, Tokyo 146-8501 (JP)
(74) Representative: Canon Europe Limited
(86) International application number: PCT/JP2023/038234
(87) International publication number: WO 2024/101134

(57) **Abstract**

An access point device transmits, in communication in which one or more other cooperating access points use Orthogonal Frequency Division Multiple Access (OFDMA) technology based on at least externally collected information, a trigger frame including information indicating a frequency resource to be used for communication with a station under control thereof to the one or more other cooperating access points. The trigger frame includes information in which identification information that identifies another access point and information indicating a frequency resource to be allocated to the other access point are associated with each other, and the trigger frame allocates a transmission opportunity using a different frequency resource to each of the one or more other cooperating access points.

## Description

### Technical Field

The present invention relates to an access point device for communicating information.

### Background Art

The Institute of Electrical and Electronics Engineers (IEEE) 802.11 standard is known as a communication standard for wireless local area network (Wireless LAN). In the IEEE 802.11be standard and its successor standards, improving communication efficiency and throughput through the coordinated operation of multiple access point devices (hereinafter referred to simply as APs) has been considered.

PTL 1 describes a technique to improve, using OFDMA technology, communication efficiency under congested conditions in wireless communication systems compliant with the IEEE 802.11 standard series. OFDMA stands for Orthogonal Frequency-Division Multiple Access.

### Citation List

### Patent Literature

PTL 1: Japanese Patent Laid-Open No. 2018-050133

### Summary of Invention

### Technical Problem

As an example of a coordinated operation performed by multiple APs, a technique for higher efficiency called Coordinated OFDMA is being considered, in which OFDMA frequency resources are allocated to appropriate APs and multiple APs perform OFDMA communication at the same timing.

However, the current wireless LAN standard does not define a procedure or mechanism for properly allocating frequency resources that are to be used by each AP for OFDMA communication at the same timing, thereby making it difficult to allocate the frequency resources appropriately. In addition, for example, the procedure for causing OFDMA communication at the same timing has not been defined.

The present invention has been made in light of at least one of the above-mentioned issues. One aspect of the present invention is to provide a mechanism for allocating frequency resources for OFDMA communication to multiple APs. Solution to Problem

An access point device according to an aspect of the present invention is an access point device that performs wireless communication in compliance with the IEEE 802.11 standard, including: in communication in which one or more other cooperating access points use Orthogonal Frequency Division Multiple Access (OFDMA) technology based on at least externally collected information, a transmission means that transmits a trigger frame including information indicating a frequency resource to be used for communication with a station under control thereof to the one or more other cooperating access points, the trigger frame includes information in which identification information that identifies another access point and information indicating a frequency resource to be allocated to the other access point are associated with each other, and the trigger frame allocates a transmission opportunity using a different frequency resource to each of the one or more other cooperating access points.

### Advantageous Effects of Invention

According to one aspect of the present invention, it is possible to allocate frequency resources for OFDMA communication to multiple APs.

### Brief Description of Drawings

[Fig. 1] Fig. 1 is a diagram illustrating an example of the configuration of a communication system.
[Fig. 2] Fig. 2 is a diagram illustrating the hardware configuration of an access point device.
[Fig. 3] Fig. 3 is a diagram illustrating the software configuration of the access point device.
[Fig. 4] Fig. 4 is a sequence diagram for describing Coordinated OFDMA.
[Fig. 5] Fig. 5 is a diagram illustrating an example of a frame in which information is collected.
[Fig. 6] Fig. 6 is a diagram illustrating an example of a frame that responds with information.
[Fig. 7] Fig. 7 is a diagram illustrating an example of a trigger frame for allocating frequency resources.
[Fig. 8] Fig. 8 is a diagram illustrating an example of the collected information.
[Fig. 9] Fig. 9 illustrates an example of control performed by the access point device.
[Fig. 10] Fig. 10 illustrates an example of frequency resource allocation control performed by the access point device.
[Fig. 11] Fig. 11 is a diagram for describing frequency allocation and throughput.
[Fig. 12] Fig. 12 is a diagram illustrating the operating frequency bands of APs 100 to 102.

### Description of Embodiments

In the following, embodiments will be described in detail with reference to the accompanying drawings. Note that the following embodiments are not intended to limit the invention according to the claims. Although multiple features are described in the embodiments, not all of these multiple features may be essential to the invention, and the multiple features may be freely combined. In the accompanying drawings, identical or similar configurations are denoted by identical reference numbers, and redundant descriptions are omitted.

### <Configuration of Communication System>

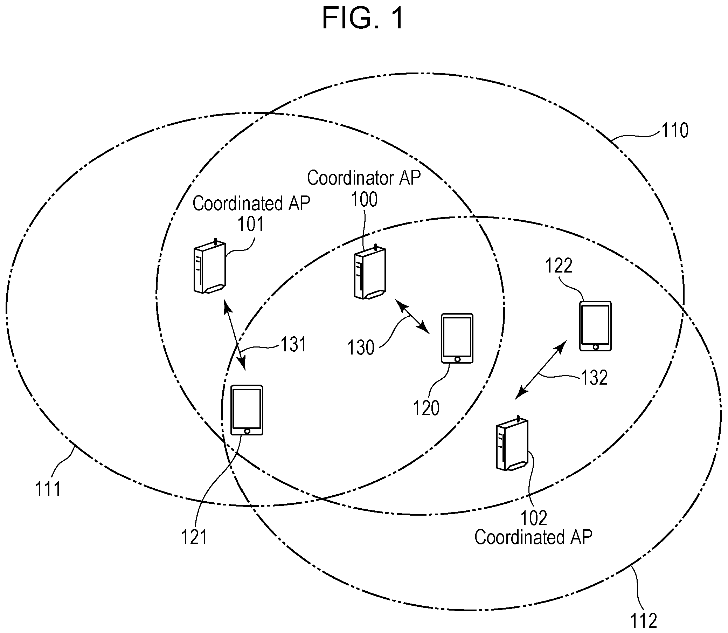

Fig. 1 illustrates an example of the configuration of a wireless communication system according to the present embodiment. This wireless communication system includes three access point devices (hereinafter also referred to simply as APs, AP STAs, access points) and three station devices (hereinafter also referred to simply as STAs, Non-AP STAs, stations). Hereinafter, APs 100 to 102 and STAs 120 to 122 will be collectively referred to as communication devices.

The APs 100 to 102 are configured to be able to communicate wireless frames compliant with the successor standard, which targets a maximum transmission rate of 90 to 100 Gbps or higher, to the IEEE 802.11be standard, which targets a maximum transmission rate of 46.08 Gbps. The STAs 120 to 122 are similarly configured to be able to communicate wireless frames compliant with the successor standard.

Note that IEEE stands for Institute of Electrical and Electronics Engineers. This successor standard to 802.11be offers, as its main features, support for reliable and low-latency communications and AP coordination. Based on the above, the successor standard, which targets a maximum transmission rate of 90 to 100 Gbps or higher, to IEEE 802.11be will also be referred to as IEEE 802.11 Ultra High Reliability (UHR) in the present embodiment. Wireless frames for communication under the successor standard are also referred to as UHR PPDUs. PPDU stands for PLCP Protocol Data Unit, and PLCP stands for Physical Layer Convergence Protocol.

The names, IEEE 802.11 UHR and the UHR standard, are established for convenience based on the goals to be achieved in the successor standard and the features that will be the main focus of the standard, and may become different names once the standard has been finalized. In contrast, note that this specification and the appended claims are essentially applicable to any successor standard to the 802.11be standard that may support a feature in which multiple APs coordinate to perform OFDMA communication. OFDMA stands for Orthogonal Frequency Division Multiple Access.

Note that Fig. 1 illustrates a wireless communication network including three APs and three STAs as an example; however, the numbers of these units may be more or less than illustrated. The APs 100 to 102 and STAs 120 to 122, which are assumed to support UHR PPDU communication (transmission and reception) and can also be configured to support communication of PPDUs under legacy standards, which are prior to the UHR standard. Specifically, the APs 100 to 102 and STAs 120 to 122 can be configured to support transmission and reception of PPDUs under the IEEE 802.11a/b/g/n/ac/ax/be standards, for example.

The APs 100 to 102 are APs that perform coordinated operation, and the AP 100 is the AP that performs overall control for coordination. In the present embodiment, an AP such as the AP 100 that performs overall control is also referred to as a Coordinator AP. The APs 101 to 102 are APs that function as controlled devices that are controlled by the Coordinator AP. In the present embodiment, APs such as the APs 101 to 102 that are controlled by the Coordinator AP are also referred to as Coordinated APs. The AP 100 provides a network 110, the AP 101 provides a network 111, and the AP 102 provides a network 112. The STAs 120 to 122 are STAs that participate in the networks provided by the access points. Fig. 1 illustrates a case where the STA 120 participates in the network 110 provided by the AP 100, the STA 121 participates in the network 111 provided by the AP 101, and the STA 122 participates in the network 112 provided by the AP 102.

The APs 100 to 102 can perform multi user (MU) communication, which uses OFDMA technology to communicate with multiple STAs simultaneously. In MU communication using OFDMA technology, one channel is divided into multiple sub-channels called Resource Units (RUs). By treating the individual RUs, which are obtained as a result of division, as resources for communicating with respective different STAs (or groups of STAs constituted by multiple STAs), an AP and the multiple STAs can communicate simultaneously over a single channel. In this case, MU PPDUs with data modulated using OFDMA are transmitted from the AP to one or more STAs. In a case where all devices support the UHR standard, assume that UHRMU PPDUs, which are MU PPDUs compliant with the UHR standard, are transmitted to one or more STAs.

The APs 100 to 102 and STAs 120 to 122 can also be configured to support wireless communications based on other communication standards, such as Bluetooth^{®}, NFC, and Bluetooth^{®} Low Energy (LE). NFC stands for Near Field Communication. The APs 100 to 102 can also be configured to support wired communications using Ethernet^{®} cables or optical fiber to establish backhaul lines as described below. Specific examples of the APs 100 to 102 and STAs 120 to 122 include, but are not limited to, wireless LAN routers and personal computers (PCs). The APs 100 to 102 and STAs 120 to 122 may be information processing devices such as wireless chips that support transmission and reception of UHR PPDUs. Specific examples of the STAs 120 to 122 include, but are not limited to, cameras, tablets, smartphones, PCs, cell phones, video cameras, and wearable devices such as smart glasses.

In the present embodiment, in a case where the APs 100 to 102 provide networks, assume that the BSSIDs of the respective networks are all different. Note that BSSID stands for Basic Service Set Identifier and is an identifier that identifies an access point. In contrast, assume that the SSIDs indicated by the APs 100 to 102 in the respective networks are all the same. SSID stands for Service Set Identifier and is an identifier that identifies a network.

Each of the communication devices, such as the APs 100 to 102 and STAs 120 to 122, can communicate using bandwidths of 20 MHz, 40 MHz, 80 MHz, 160 MHz, 320 MHz, 480 MHz, and 640 MHz.

Subsequently, a cooperative operation in which multiple APs, the APs 100 to 102, are operated in a coordinated manner will be described. The APs 100 to 102 can perform coordinated operation. Specifically, the AP 100 can allocate OFDMA frequency resources to appropriate APs and achieve a Coordinated OFDMA communication function where multiple APs including the AP 101 perform OFDMA communication at the same timing.

Hereinafter, the mechanism for achieving the Coordinated OFDMA communication function will be specifically described. In order to effectively describe the Coordinated OFDMA function, it is assumed that in the wireless communication system according to the present embodiment, the APs 100 to 102 provide networks in which STAs can participate using the same operating frequency band and the same bandwidth.

First, the backhaul lines for transmitting and receiving data and control signals between APs are described. The AP 100 and the APs 101 and 102 can communicate with each other via backhaul lines. The backhaul lines may be communication channels using wired media such as cables, which are for example optical fibers or Ethernet cables, or may be communication channels using wireless media. Note that in a cases where wireless media are used as the backhaul lines in this wireless communication system, it is necessary to suppress interference with the networks 110 to 112 for the STAs. Thus, each AP establishes a backhaul line, which is a communication link for backhaul communication, on a frequency channel different from the operating frequency used in the networks 110 to 112.

### (Device Configuration)

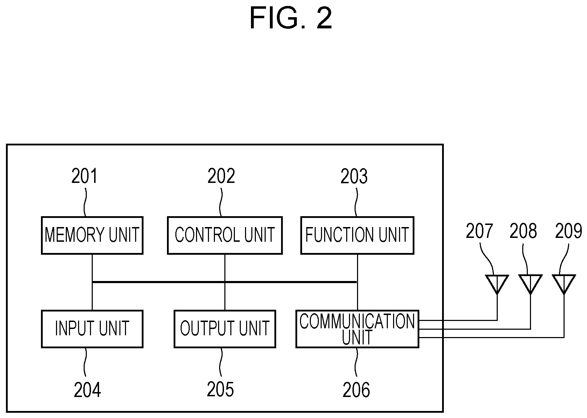

Fig. 2 illustrates an example of the hardware configuration of communication devices (the APs and STAs). As an example of the hardware configuration, each communication device includes, a memory unit 201, a control unit 202, a function unit 203, an input unit 204, an output unit 205, a communication unit 206, and antennas 207 to 209. If the backhaul lines are achieved using wired media, there may be only one antenna.

The memory unit 201 includes either or both ROM and RAM, and stores programs for performing various operations described below and various types of information, such as communication parameters for wireless communication. RAM stands for Random Access Memory, and ROM stands for Read Only Memory. In addition to memory components such as a ROM and a **RAM,** non-volatile storage devices, such as a hard disk and solid state drive (SSD), may be used as the memory unit 201.

The control unit 202 includes, for example, a processor such as a CPU or MPU, an application-specific integrated circuit (ASIC), a digital signal processor (DSP), a field programmable gate array (FPGA), and the like. In this case, CPU is an acronym for Central Processing Unit, and MPU is an acronym for Micro Processing Unit. The control unit 202 controls the entire device by executing programs stored in the memory unit 201 and operating hardware circuits, such as ASICs. The control unit 202 may control the entire device in cooperation with the programs and operating system (OS) stored in the memory unit 201.

The control unit 202 also controls the function unit 203 to perform predetermined processes, such as image capturing, printing, and projection. The function unit 203 is the hardware that allows the device to perform the predetermined processes. For example, in a case where the communication device is a camera such as a digital still camera or a smartphone with a camera, the function unit 203 is an image capturing unit, which performs a process for capturing images of the surroundings via a camera unit (not illustrated) of the communication device. For example, in a case where the communication device is a printer, the function unit 203 is a printing unit, which performs printing processing on sheets of paper or other media on the basis of print data obtained from outside via wireless communication. For example, in a case where the communication device is a projector or smart glasses, the function unit 203 is a projection unit, which performs projection processing for image or video data obtained from outside via wireless communication. In the case of smart glasses, the projection surface is the end user's retinas, for example. The data to be processed by the function unit 203 may be data stored in the memory unit 201 or data communicated with other APs or STAs via the communication unit 206 described below. Furthermore, communication devices, such as the AP 101, can also provide network storage functions, such as network attached storage (NAS). Such functions are provided to other communication devices as web services such as network storage services. For example, communication devices such as STAs connect to the network storage services provided by the APs 101 to 103, for example, using protocols, such as SMB, FTP, and WebDAV, for example. The communication devices such as STAs then upload files to such storage services or download files within such storage. Such upload and download data communication is also achieved by communicating UHR PPDUs between the devices.

The input unit 204 accepts various operations from the user. The output unit 205 provides various outputs to the user. In this case, outputs from the output unit 205 include, for example, at least one of display on a screen, sound output by a speaker, vibration output, and the like. It is possible to realize both the input unit 204 and the output unit 205 in a single module, such as a touch panel.

The communication unit 206 controls wireless communication in compliance with the IEEE 802.11 standard series and controls IP communication. In the present embodiment, the communication unit 206 can cooperate with the antennas 207 to 209 to transmit and receive UHR PPDUs, which are wireless frames based on the UHR standard, and PPDUs corresponding to its earlier standards. The antennas 207 to 209 are antennas capable of transmitting and receiving signals in at least one of, for example, the Sub-GHz, 2.4 GHz, 5 GHz, 6 GHz, 7 GHz, and 60 GHz bands.

In a case where the communication devices support, for example, the above-mentioned NFC and Bluetooth standards, it is sufficient that the communication unit 206 be configured to control wireless communication in compliance with these communication standards.

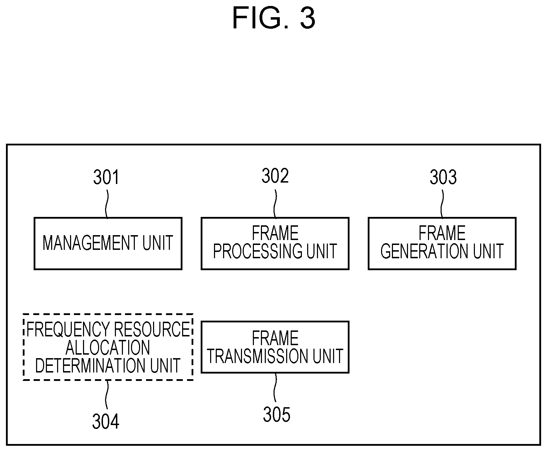

Subsequently, the functional configuration of the APs 100 to 102 will be described using Fig. 3. Fig. 3 is a block diagram for describing the functional configuration of the APs 100 to 102. Fig. 3 illustrates a selected portion of the functional configuration necessary to describe the Coordinated OFDMA function. A communication device has a management unit 301, a frame processing unit 302, a frame generation unit 303, a frequency resource allocation determination unit 304, and a frame transmission unit 305. The allocation determination unit 304 indicated by the dashed line is a function that the APs 100 to 102 have. Note that the STAs 120 to 122 have a similar function configuration; however, the STAs 120 to 122 do not have to have the allocation determination unit 304 indicated by the dashed line.

Each function will be described. The management unit 301 measures the quality of communication with STAs that are participating in its own network, and manages the measured information. Specifically, the management unit 301 stores the communication quality in association with association identifiers (AIDs), the identification information of the STAs. The identification information of the STAs may be identification information other than the AIDs. In addition, the management unit 301 manages communication parameters necessary for communication with STAs, such as the MCS used for communication with other communication devices, information regarding its own operating frequency band, and information regarding the bandwidth for communicating PPDUs. MCS stands for Modulation and coding scheme, and is information indicating the modulation and coding scheme to be applied in communication. The Coordinator AP also manages, for example, information regarding the operating frequency band in which the Coordinated APs operate, and bandwidth information.

The frame processing unit 302 cooperates with the antennas 207 to 209 to interpret various wireless frames received from outside and send notifications to upper layer functions, which are not illustrated, and performs control processing on wireless communication based on the information obtained through interpretation. The processing unit 302 further processes communication quality request frames described below and performs control to determine information to be included in a response, the information being included in the communication quality information managed by the management unit 301. Having determined the information to be included in the response, the processing unit 302 makes a request to the generation unit 303 to generate a response frame and to include the information to be included in the response. The processing unit 302 of the Coordinator AP processes the response frames to the communication quality request frame and received from the Coordinated APs, and acquires the communication quality information regarding the Coordinated APs. The acquired information is transferred to the management unit 301. The management unit 301, which has received the transferred information, manages the information as the communication quality information regarding the Coordinated APs.

The frame generation unit 303 generates wireless frames, such as the UHR PPDUs mentioned above, on the basis of data received from the upper layer functions, which are not illustrated. The frame generation unit 303 also generates, on the basis of requests from the processing unit 302 and the determination unit 304, wireless frames for controlling wireless communication and coordinated operation. The wireless frames generated by the generation unit 303 to control the coordinated operation will be described. The generation unit 303 can generate frames to request, from other APs, information regarding the quality of communication with STAs participating in the network. When the generation unit 303 receives a request including the frequency resource allocation information determined by the determination unit 304 described below, the generation unit 303 generates a frame to cause the Coordinated APs to transmit a data frame. The frame transmission unit 305 cooperates with the antennas 207 to 209 to transmit wireless frames, such as UHR PPDUs, generated by the generation unit 303 toward external APs and STAs. A specific format of frames for coordination communication will be described below.

The determination unit 304 determines the allocation of the frequency resources to each Coordinated AP and itself on the basis of information, such as the communication quality information collected from the Coordinated APs and the communication quality information measured by the management unit 301 and managed by itself. The determination unit 304 then requests the generation of a frame that includes the determined frequency resources and causes the Coordinated APs to transmit a data frame, from the generation unit 303.

### <Coordinated OFDMA>

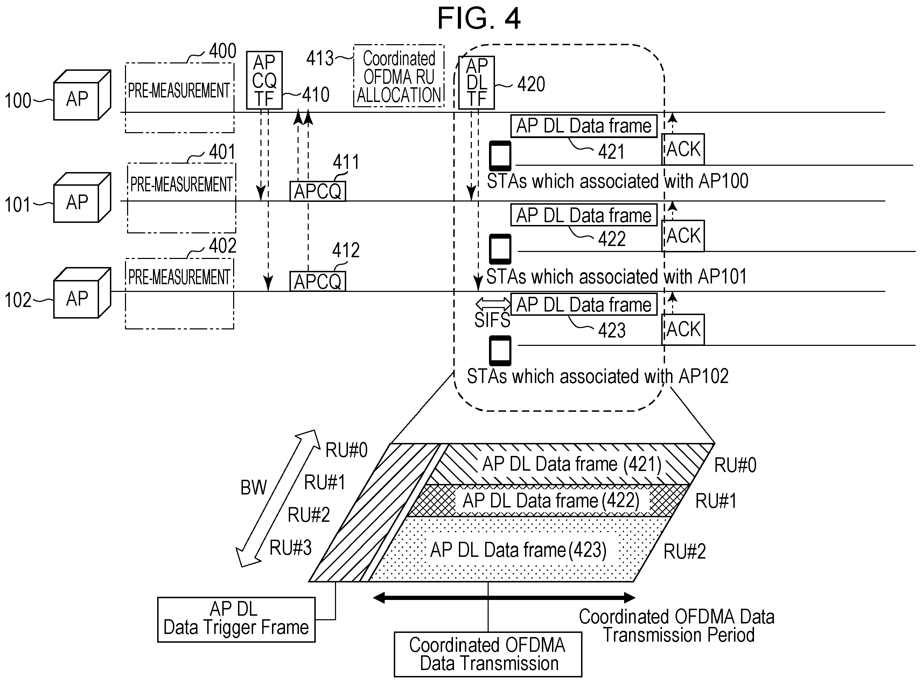

Subsequently, the procedure for executing the Coordinated OFDMA function will be described using the sequence diagram in Fig. 4. Fig. 4 is a sequence diagram illustrating an example of wireless frame exchange in a case where the Coordinated OFDMA function is executed.

The AP 100, which is a Coordinator AP, measures in advance and manages the quality of communication with STAs participating in its own network (400). The communication quality can be measured in advance by the AP transmitting a communication quality measurement frame to the STAs and acquiring, from the STAs, the communication quality for when the STAs received the frame. In the present embodiment, the communication quality is measured for each frequency resource that is obtained as a result of division and is called a Resource Unit (RU). For example, in a case where the AP 100 transmits a wireless frame using a predetermined bandwidth such as 40 MHz, the communication quality is measured for each of the subcarriers that constitute a 26-tone RU, which is the minimum unit of an RU. The unit of measurement and the method of measuring communication quality are not limited to this. For example, the AP may measure the communication quality for each RU by measuring the reception levels of probe request frames transmitted by the STAs. Other wireless frames may also be used to measure the communication quality for each RU. When there are multiple STAs under the AP's control, assume that the communication quality of each STA is to be measured. The APs 101 and 102, which are Coordinated APs, also perform substantially the same pre-measurement process (401, 402) and manage the quality of communication with STAs connecting to their networks. In a case where a single STA has the capability to establish multiple communication links, the single STA can participate in the networks of multiple APs simultaneously.

Once the pre-measurement is completed, the collection process is performed by the Coordinator AP 101. Specifically, the AP 100 transmits an AP Channel Quality Trigger frame, which is a communication quality request frame, to acquire communication quality information from the APs 101 and 102, which are Coordinated APs, (410).

This frame is broadcast to the surrounding area including the APs 101 and 102. The APs 101 and 102 transmit an AP Channel Quality frame, which is a response frame including the communication quality, in response to this frame (411, 412).

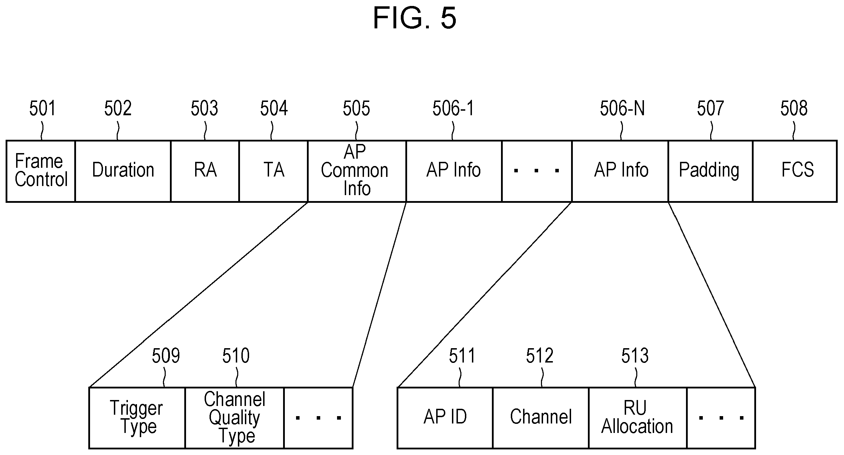

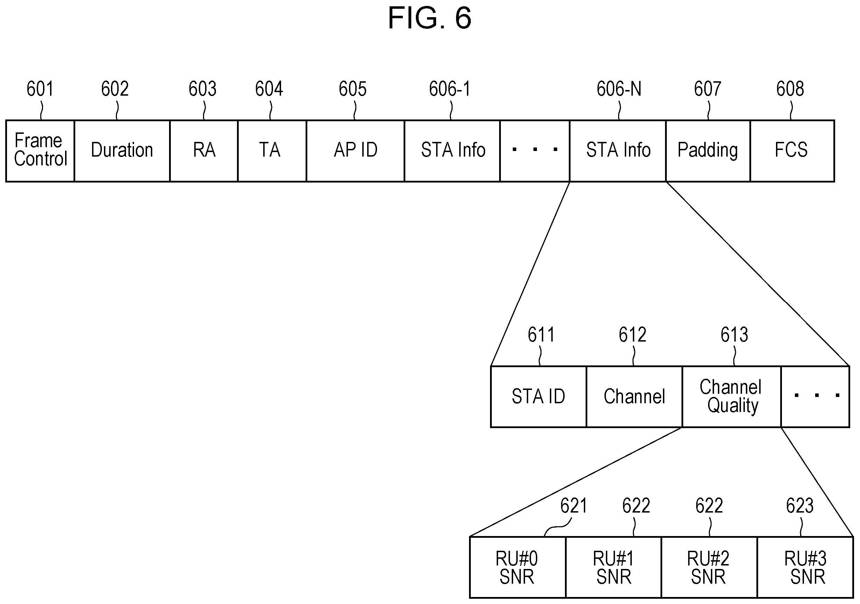

The AP Channel Quality Trigger frame and the AP Channel Quality frame will be described using Figs. 5 and 6. Hereinafter, the AP Channel Quality Trigger frame will be abbreviated and also referred to as APCQTF.

Fig. 5 illustrates an example of the format of the AP Channel Quality Trigger frame transmitted by the Coordinator AP 100 to the APs 102 and 103.

A Frame Control Field 501 includes a Type subfield and a Subtype subfield, which indicate the frame type. In the present embodiment, a frame with the Type subfield set to "01", which indicates Control Field, and the Subtype subfield set to "0001", which indicates AP Trigger, is defined as an AP Trigger type frame. Table 1 is a table that describes the frame types.

### [Table 1]

**Table 1**

| Type value B3 B2 | Type description | Subtype value B7 B6 B5 B4 | Subtype description |
|---|---|---|---|
| 00 | Management | 0000-1111 | Management frames (Association Request/Response, Beacon, etc.) |
| 01 | Control | 0000 | AP Channel Quality |
| 01 | Control | 0001 | AP Trigger |
| 01 | Control | 0010 | Trigger |
| 01 | Control | 0011 | TACK |
| 01 | Control | 0100 | Beamforming Report Poll |
| 01 | Control | 0101 | NDP Announcement |
| 01 | Control | 0110 | Control Frame Extension |
| 01 | Control | 0111 | Control Wrapper |
| 01 | Control | 1000 | Block Ack Request (BlockAckReq) |
| 01 | Control | 1001 | Block Ack (BlockAck) |
| 01 | Control | 1010 | PS-Poll |
| 01 | Control | 1011 | RTS |
| 01 | Control | 1100 | CTS |
| 01 | Control | 1101 | Ack |
| 01 | Control | 1110 | CF-End |
| 01 | Control | 1111 | Reserved |
| 10 | Data | 0000-1111 | Data frames (Data, QoS data, etc.) |

A Duration Field 502, an RA Field 503, and a TA Field 504 correspond to the contents of the MAC header of a trigger frame, which is a control frame defined in the IEEE 802.11ax standard.

An AP Common Info Field 505 includes information common to all APs. A Trigger Type Field 509 includes information that identifies the Trigger frame to be transmitted to the APs as illustrated in Table 2. For example, in the case of an AP Channel Quality Trigger frame, the Trigger Type is set to 0. In the case of an AP DL Data Trigger frame, which is a frame for causing the Coordinated APs to transmit a data frame, the Trigger Type is set to 1.

### [Table 2]

**Table 2**

| Subfield Value | Trigger Frame Type |
|---|---|
| 0 | AP Channel Quality |
| 1 | AP DL Data |
| 2-15 | Reserved |

Subsequently, a Channel Quality Type Field 510 indicates the type of communication quality requested. Table 3 is used to describe the types. Table 3 illustrates values that can be stored in the Channel Quality Type Field 510 and their descriptions.

### [Table 3]

**Table 3**

| Subfield Value | Types of Requested Communication Quality |
|---|---|
| 0 | RSSI (Received Signal Strength Indicator) |
| 1 | SNR (Signal to Noise Ratio) |
| 2 | CNR (Carrier to Noise Ratio) |
| 3 | Data rate |
| 4 | MCS (Modulation and Coding Scheme) information |
| 5 | Error rate |
| 6 | Communication availability |
| 7-15 | Reserved |

The Coordinator AP 100 sets the corresponding subfield to the value corresponding to the type of communication quality requested. The field can also be configured to set the requested values in the form of a bitmap field, where a value of 1 is set for the requested types and 0 for the unrequested types. Table 4 is an example of a bitmap field defined to specify the requested communication quality in an 8-bit bitmap field.

### [Table 4]

**Table 4**

| Bit value | Types of Requested Communication Quality |
|---|---|
| B0 | RSSI (Received Signal Strength Indicator) |
| B1 | SNR (Signal to Noise Ratio) |
| B2 | CNR (Carrier to Noise Ratio) |
| B3 | Data rate |
| B4 | MCS (Modulation and Coding Scheme) information |
| B5 | Error rate |
| B6 | Communication availability |
| B7-8 | Reserved |

In the present embodiment, the error rate requested by the APCQTF may be specifically any one of the packet error rate, bit error rate, or frame error rate.

The communication availability-unavailability information indicates whether communication between an STA and a Coordinated AP is possible. As a communication availability-unavailability response, the Coordinated AP responds, for example, with a bitmap field in which a value of 0 or 1 is specified for each 26-tone RU. 0 indicates that communication is not possible, while 1 indicates that communication is possible. The RU size is an example, and a configuration is also possible in which the communication availability/unavailability is responded with an RU equivalent to a larger number of tones.

An AP Info Field 506, which is the subsequent field, stores information addressed to the Coordinated APs. For example, in a case where there are N Coordinated APs, the APCQTF includes N AP Info Fields, which are AP Info Fields 506-1 to 506-N.

Each AP Info Field stores information regarding a corresponding one of the APs from which communication quality is requested. An AP ID Field 511 stores information that identifies the AP. As the identification information, information that uniquely identifies the AP that is performing coordinated operation can be used. Examples of the information include a Media Access Control (MAC) address, a BSSID, and a BSS Color identification. A Channel Field 512 includes a channel over which the communication quality is provided as feedback and includes information that identifies the frequency band, channel number, and Resource Unit (RU). An RU Allocation Field 513 is information indicating the RU allocation that is to be used when the Coordinated APs simultaneously transmit, using OFDMA, response frames that include the communication quality.

A Padding Field 507 is a field used to ensure processing time for the Coordinated APs to transmit the response frames. The 802.11ax and later standards specify that a Trigger-based PPDU (TBPPDU), which is a response to a trigger frame, is to be transmitted after a SIFS time has elapsed from the completion of reception of the trigger frame. SIFS stands for Short Interframe Space. Thus, the processing time for the Coordinated APs to generate TB PPDUs can be ensured by storing padding information (also called padding data) in the Padding Field and intentionally delaying the completion of reception. In a case where the delay is caused by padding, the size of the padding information is set on the basis of a predetermined size value set at the time of factory shipment on the basis of general computing power and the like.

The method for ensuring the processing time is not limited to this. A field may be provided that specifies, using an offset value, the transmission start time and the like of the response frame in response to the trigger frame, and the response time may be designed to be adjusted on the basis of the value of the field. This SIFS time and the offset-based waiting time are examples of predetermined times. For other Trigger frames described below, the response start time may also be designed to be adjusted using the offset value in the same manner.

Lastly, an FCS Field 508 stores Frame Check Sequence information for frame error detection.

In the present embodiment, description will be made assuming that the APCQTF is to be transmitted in which the APs 101 and 102 are specified as destinations for issuing communication quality feedback requests.

Returning to the description of Fig. 4, the Coordinated APs 101 to 102 that have received the APCQTF generate AP Channel Quality frames that indicate communication quality information before the SIFS time elapses after the completion of reception of the APCQTF. Hereinafter, the frame is abbreviated and also referred to as APCQ. The format of the frame is TB PPDU. Then, the APs 101 to 102 each transmit an APCQ frame, in which communication quality information is modulated, over the subcarriers corresponding to the RU allocated thereto in the AP Info Field at the timing when the SIFS time has elapsed after the completion of reception of the APCQTF (411, 412).

The APCQ frame will be specifically described using Fig. 6. Fig. 6 illustrates an example of the format of the APCQ frame transmitted by the Coordinated APs 101 and 102.

A Frame Control Field 601 includes a Type subfield and a Subtype subfield, which indicate the frame type. In the present embodiment, as illustrated in Table 1, the APCQ frame is defined as a frame with the Type subfield set to 01 and the Subtype subfield set to 0000.

Note that the Type and Subtype subfields may have different values as long as the AP Channel Quality frame can be identified. For example, as illustrated in Table 5, a frame with the Type subfield set to 11, which indicates Extension, and the Subtype subfield set to 0011, for example, can be defined as an APCQ frame. The AP Trigger type frame mentioned above can also be defined as a frame belonging to the Extension type. For example, a frame with the Type subfield set to 11, which indicates Extension, and the Subtype subfield set to 0100, for example, can be defined as an AP Trigger type frame.

### [Table 5]

**Table 5**

| Type value B3 B2 | Type description | Subtype value B7 B6 B5 B4 | Subtype description |
|---|---|---|---|
| 11 | Extension | 0000 | DMG Beacon |
| 11 | Extension | 0001 | S1G Beacon |
| 11 | Extension | 0010 | AP Channel Quality |
| 11 | Extension | 0011-1111 | Reserved |

A Duration Field 602, an RA Field 603, and a TA Field 604 match the contents of the MAC header based on the IEEE 802.11 standard, and are set to information indicating that the AP 100, the coordinator AP, is the destination.

An AP ID Field 605 stores identification information that identifies the Coordinated AP. It is sufficient that the identification information be a MAC address, BSSID, BSS Color, or other information that uniquely identifies the AP.

An STA Info Field 606, which is the subsequent field, stores information regarding individual STAs under control of this Coordinated AP. In a case where there are N STAs under control of the Coordinated AP, the APCQ frame includes N fields, which are STA Info Fields 606-1 to 606-N.

The content of each STA Info Field will be further described.

An STA ID Field 606 stores identification information that identifies the STA. In the present embodiment, it is assumed that an AID be used as the identification information of the STA but is not limited to this. For example, other identification information, such as a MAC address, may be used.

A Channel Field 612 includes information that indicates channel information, for which the communication quality is provided as feedback, and that identifies the frequency band, channel number, and Resource Unit (RU).

A Channel Quality Field 613 includes the communication quality information specified in the Channel Quality Type Field 510 of the APCQTF. Fig. 6 illustrates an example of a response transmitted in a case where the Channel Quality Type Field 510 of the APCQTF is set to 1, and the SNR of each RU is stored in 621 to 624.

The processing unit 302, the management unit 301, and the generation unit 303 of the Coordinated APs 101 and 102 cooperate to extract the communication quality information to be provided as feedback from the various types of communication quality information managed by the management unit 301, and set the extracted communication quality information in the APCQ frame.

Returning to the description of Fig. 4, the AP 100, which is the Coordinator AP that has received the APCQ frames transmitted in 411 and 412, stores, in the management unit 301, the quality information regarding the Coordinated APs included in the received APCQ frames.

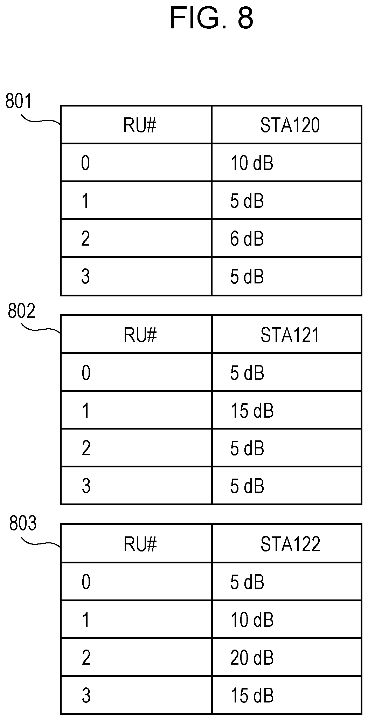

Fig. 8 is a diagram illustrating an example of the communication quality information collected and managed by the Coordinator AP 100. This example illustrates the communication quality information obtained in a case where SNR is specified in the Channel Quality Type Field 510, and the communication quality information regarding and managed by the AP 100. 801 denotes the communication quality obtained when the AP 100 and the STA 120 use RU#0 to RU#3, and 802 denotes the communication quality obtained when the AP 100 and the STA 121 use RU#0 to RU#3. 803 denotes the communication quality obtained when the AP 102 and the STA 122 use RU#0 to RU#3. For example, when the AP 101 communicates with the STA 121 using RU#1, the SNR is found to be 15 dB. The data rate of the wireless communication is determined by the MCS selected on the basis of SNR. For simplicity of description, as an example, the case is illustrated in which the number of STAs participating in each AP is 1, the size of one RU is 20 MHz, and the measurement target RU size for communication quality is also 20 MHz. However, the values are not limited to these.

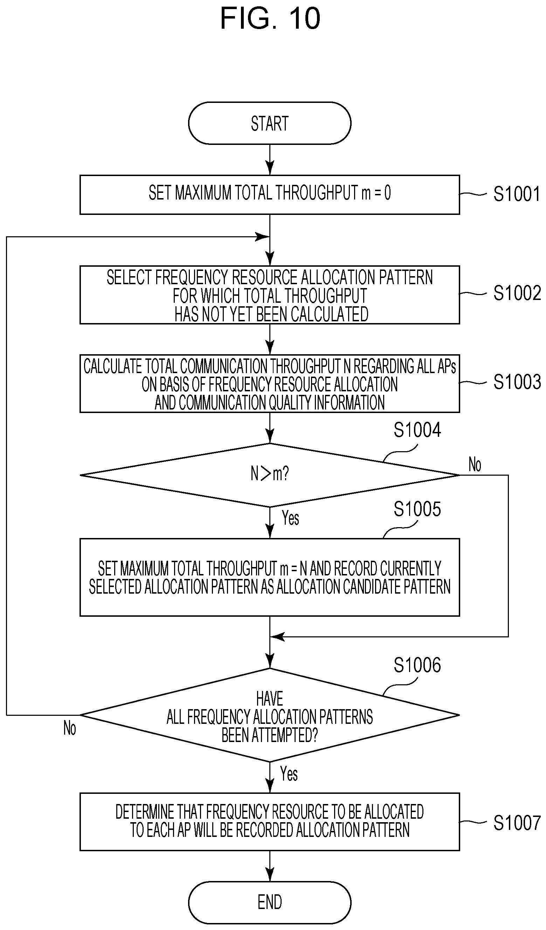

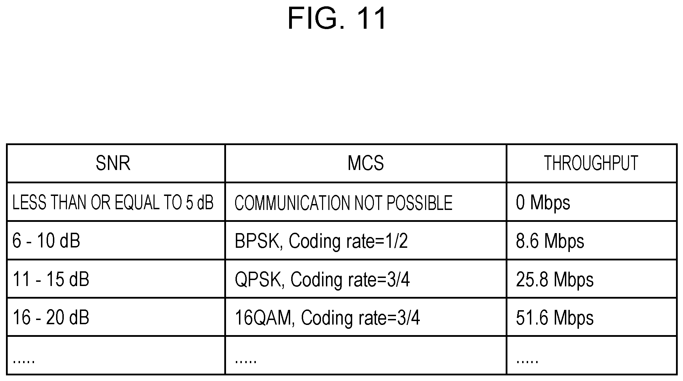

Return to the description of Fig. 4. In the present embodiment, the frequency resources are allocated to each AP so that the total communication throughput during the period indicated by the Coordinated OFDMA Data Transmission Period in the diagram is improved. The communication throughput will be described using Fig. 11. Fig. 11 is a diagram describing the relationship between SNR, MCS, and communication throughput. In a case where the noise ratio is high, the MCS needs to be lowered to withstand the noise. In a case where the noise ratio is low, communication can be performed with a high MCS. For example, in a case where the noise ratio is less than or equal to 5 dB, communication is not possible and the throughput is 0 Mbps. For example, when the noise ratio is 6 to 10 dB, binary phase-shift keying (BPSK) is used as the modulation method and a coding rate of 1/2 is used. Thus, if it is assumed that a frequency resource with a bandwidth of 20 MHz is used, a throughput of 8.6 Mbps is expected. When the noise ratio is 11 to 15 dB, quadrature phase shift keying (QPSK) is used as the modulation method and a coding rate of 3/4 is used. Thus, if it is assumed that a frequency resource with a bandwidth of 20 MHz is used, a throughput of 25.8 Mbps is expected. When the noise ratio is 16 to 20 dB, quadrature amplitude modulation (16QAM) is used as the modulation method and a coding rate of 3/4 is used. Thus, if it is assumed that a frequency resource with a bandwidth of 20 MHz is used, a throughput of 51.6 Mbps is expected. Using this communication quality information, the AP 101 can determine the allocation of frequency resources to the APs 102 and 103 for improved communication efficiency. In this example, when the AP 101 is assigned RU#0, the AP 101 is assigned RU#1, and the AP 102 is assigned a 40 MHz frequency resource formed by RU#2 and RU#3, it can be seen that the physical throughput is improved, thereby enabling more efficient communication. The frequency resource allocation process will be specifically described below using Fig. 10. In this example, for each AP, the quality of communication with one STA is indicated, but each AP may acquire the quality of communication with two or more STAs.

Returning to the description of Fig. 4, the procedure from the allocation will be described in which Coordinated OFDMA processing may be executed.

The AP 100 performs the process of determining the allocation of RUs to be used in Coordinated OFDMA, on the basis of the quality information managed by the management unit 301, the operating frequency, and other information (413). Subsequently, the AP 100 transmits an AP DL Data Trigger frame, which is a data transmission request frame including frequency resource information, to the Coordinated APs 101 to 102 (420). Hereinafter, the AP DL Data Trigger frame is also referred to as APDLTF.

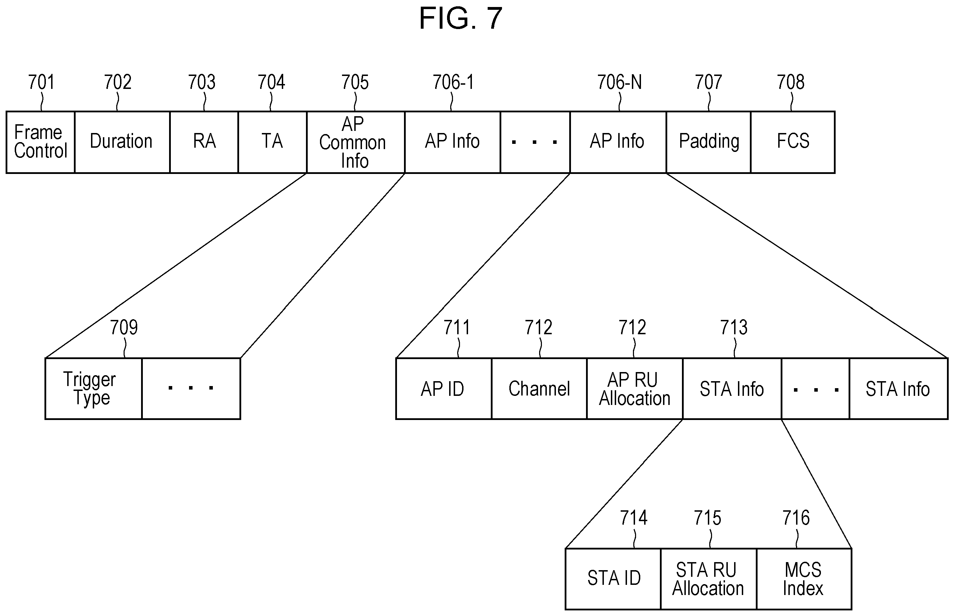

The APDLTF will be specifically described using Fig. 7. Fig. 7 illustrates an example of the format of the APDLTF transmitted by the Coordinated AP 100.

A Frame Control Field 701 includes a Type subfield and a Subtype subfield, which indicate the frame type. To indicate that this is a trigger frame for AP coordination as illustrated in Table 1 mentioned above, the Type subfield is set to 01, and 0001 is specified in the Subtype subfield. A Duration Field 702, an RA Field 703, and a TA Field 704 correspond to the contents of the MAC header of the trigger frame, which is a control frame defined in the IEEE 802.11ax standard.

An AP Common Info Field 705, which is the subsequent field, includes information common to all APs. A Trigger Type Field 709 stores information that identifies the Trigger frame illustrated in Table 2. In the case of APDLTF, "1" illustrated in Table 2 is stored. Although not illustrated in Fig. 7, the AP 100 can cause the AP Common Info Field 705 to include various other types of information that are to be reported to the Coordinated APs.

An AP Info Field 706, which is the subsequent field, stores individual pieces of information addressed to these respective APs. In a case where there are N Coordinated APs, the AP Info Field 706 includes N fields, which are AP Info Fields 706-1 to 706-N. Information addressed to the AP 100 itself can also be stored in that field. In this case, the APDLTF includes N + 1 fields.

The contents of the AP Info Field will be further described. The AP Info Field of the APDLTF stores information to be reported to each AP. Specifically, information that identifies the frequency resources to be used for downlink MU OFDMA transmission is stored.

An AP ID Field 710 stores information that identifies the AP. The identification information is identification information that uniquely identifies the AP, such as a MAC address, BSSID, BSS Color, or other information.

A Channel Field 711 stores information including the frequency band and channel number, which are channel information that the Coordinated AP is allowed to use for transmitting downlink data. In the present embodiment, the minimum frequency resource allocated to each AP is a 20 MHz bandwidth in order to avoid interference between the preambles of the UHR MU PPDUs that the respective APs transmit when simultaneous transmission is performed using Coordinated OFDMA.

An AP RU Allocation Field 712 stores information indicating RU allocation for when the Coordinated AP transmits DL frames using OFDMA. An STA Info Field 713 stores information regarding an STA to which the Coordinated AP is to transmit a DL frame using OFDMA. An STA ID Field 714 stores identification information that identifies the STA. This identification information is assumed to be, but not limited to, the AID of the STA. For example, other identification information, such as a MAC address or BSSID, may be used.

An STA RU Allocation Field 715 stores information indicating the RU that the Coordinated AP is to use when transmitting data to the STA corresponding to the STA ID Field 714. An MCS Index Field 716 stores information indicating the MCS to be applied when a DL data frame is transmitted to the STA corresponding to the STA ID Field 714.

A Padding Field 707 is a field used to ensure processing time for the Coordinated AP to transmit the OFDMA MU PPDU to multiple STAs under its control. An FCS Field 708 stores Frame Check Sequence information for frame error detection.

Return to the description of Fig. 4. The APs 101 to 102, which have received the APDLTF transmitted from the AP 100, and the AP 100 generate AP DL DATA frames for transmitting data to the STAs under their control before the SIFS time elapses. In this case, the APs 101 to 102 determine STAs to be the targets of simultaneous transmission using DL MU OFDMA on the basis of the information included in the APDLTF and in the AP Info corresponding thereto. Each AP DL DATA frame generated in this case is a UHR MU PPDU format frame that stores information indicating, in the frame preamble, OFDMA transmission, its destination STAs, and RU allocation status. Then, each of the APs 100 to 102 transmits the AP DL DATA frame, which is a DL MU PPDU, at the timing when the SIFS time has elapsed after the completion of reception of the APCQTF (421, 422, 423). Fig. 4 illustrates an example of allocation for a case where the frequency bandwidth used for Coordinated OFDMA transmission is 80 MHz. More specifically, the case is illustrated in which the AP 100 is assigned RU#0 corresponding to a 20 MHz sub-band, and the AP 101 is assigned RU#1 corresponding to a 20 MHz sub-band. The case is illustrated in which the AP 102 is assigned RU#2, which is a 40-MHz frequency resource corresponding to two 20 MHz sub-bands. Each AP uses the allocated frequency resource to transmit data to one or more STAs under its control. The actual data transmitted to the STAs in this frame is the user data transferred in advance from the AP 100 to the APs 101 to 102, which are the Coordinated APs, via the backhaul lines. Typical examples of the user data are video, audio, and images.

When the SIFS time has elapsed after the completion of the reception, each STA that has received the data transmits an ACK to the AP, which is the data transmission source, and completes the series of procedures for simultaneous transmission based on the Coordinated OFDMA function.

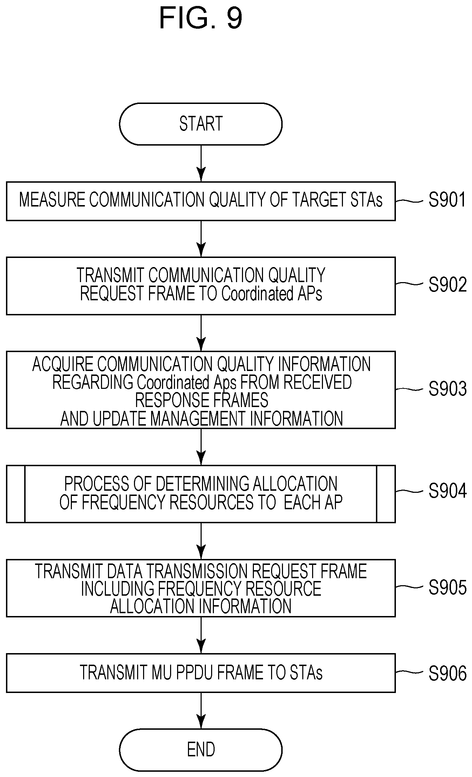

Subsequently, control performed by the Coordinator AP 100 will be described using the flowcharts in Figs. 9 and 10. The flowcharts in Figs. 9 and 10 illustrate a selected portion of the procedures for implementing Coordinated OFDMA. Each process indicated in each flowchart is executed by the processor of the control unit 202 of the AP 100 executing a computer program stored in the memory unit 201. Some processes, such as transmission and modulation, are achieved by the processor of the control unit 202, the communication unit 206, and the ASIC, DSP, FPGA, etc., of the control unit 202 cooperating with each other. In a case where it is desired to clearly indicate the subject of the process, the functional unit described in Fig. 3 is used as the subject of the description.

First, in S901, the management unit 301 measures the quality of communication with STAs participating in the network the AP 100 provides, and stores the measurement results. Subsequently, in S902, the frame generation unit 303 generates an APCQTF, a trigger frame that requests communication quality information from the APs 101 and 102. Next, the generation unit 303 cooperates with the transmission unit 305 and the communication unit 206 to transmit the generated APCQTF. When the transmission is completed, the process proceeds to S903.

In S903, the processing unit 302 acquires communication quality information from response frames received via at least one or more of the antennas 207 to 209 and demodulated by the communication unit 206, and reports the acquired information to the management unit 301. The response frames received and demodulated in S903 are the APCQ frames mentioned above. The management unit 301 updates the current management information regarding the Coordinated APs on the basis of the reported communication quality information. This process updates the communication quality information regarding the Coordinated APs managed by the management unit 301.

In S904, the determination unit 304 performs the process of determining the allocation of the frequency resources to the AP 100 and Coordinated APs, such as the APs 101 to 102. This process will be described below using Fig. 10. When the AP 100 completes the process of determining the allocation of the frequency resources to each AP, the process proceeds to S905.

In S905, the generation unit 303 generates an APDLTF, a data transmission request frame, on the basis of the frequency allocation information determined in S904. Subsequently, the generation unit 303 cooperates with the transmission unit 305, the communication unit 206, and one or more antennas to transmit the generated APDLTF to the outside. When the AP 101 completes the transmission, the process proceeds to S906.

Lastly, in S906, the generation unit 303 generates a UHR MU PPDU at the timing when the SIFS time has elapsed from the time when the reception of the APDLTF transmitted in S905 is completed. This UHR MU PPDU is an MU PPDU in which the RUs to be used for data transmission to one or more STAs under its control are determined on the basis of the frequency allocation information indicated in the APDLTF, and data for each STA are stored in the RUs. Subsequently, the generation unit 303 cooperates with the transmission unit 305, the communication unit 206, and the one or more antennas to transmit the generated UHR MU PPDU to the outside.

In this case, as described using Fig. 4, the APs 101 and 102, which are Coordinated APs, also simultaneously transmit UHR MU PPDUs for transmitting data using OFDMA to STAs under their control. That is, the APDLTF causes each Coordinated AP to be assigned a transmission opportunity in the Coordinated OFDMA Data Transmission Period. In this case, as illustrated in Fig. 4, the RUs obtained by dividing a certain frequency width can be shared by the Coordinated APs and the Coordinator AP, so that Coodinated OFDMA communication is enabled in which multiple APs are coordinated.

In a case where an offset value indicating the time to start transmitting the response frame is specified in a field of the APDLTF transmitted by the AP 100, it is sufficient that each AP transmit an MU PPDU at the timing when the time specified by the offset value has elapsed.

Each AP may transmit data using an HE MU PPDU based on the previous standard in a case where there are STAs under its control that support only the previous standard, such as IEEE 802.11ax.

Lastly, the frequency resource allocation process will be described using Fig. 10. Fig. 10 is a flowchart describing the details of the allocation process performed in S904.

In S1001, the determination unit 304 initializes a variable m to 0, which stores the maximum total throughput used when determining the optimal frequency resource allocation. Next, in S1002, the AP 100 selects a frequency resource allocation pattern for which the total throughput has not yet been calculated. For example, RU#0 is allocated to the AP 100, RU#1 is allocated to the AP 101, RU#2 is allocated to the AP 102, and RU#3 is allocated to the AP 102. Next, in S1003, the determination unit 304 calculates a total communication throughput value N estimated on the basis of the selected frequency resource allocation pattern and the communication quality information regarding each AP managed by the management unit 301. This N means the expected communication throughput of a transmission performed with a certain resource allocation pattern during the Coordinated OFDMA Data Transmission Period.

Subsequently, in S1004, the determination unit 304 determines whether the value N calculated in S1003 is greater than the value of the variable m. In a case where it is determined that the value N is greater than the value of the variable m, the process proceeds to S1005. In a case where it is determined that the value N is not greater than the value of the variable m, the process in S1005 is skipped and the process proceeds to S1006.

In S1005, the determination unit 304 updates the variable m with N and stores the pattern selected in S1002 as an allocation candidate pattern.

In S1006, the determination unit 304 determines whether or not all frequency allocation patterns have been attempted. In a case where all frequency allocation patterns have been attempted, the process proceeds to S1007. In a case where there are frequency allocation patterns that have not yet been attempted, the process proceeds to S1002 to attempt another pattern to see if a pattern with higher throughput exists.

In S1007, the determination unit 304 determines that the frequency resource to be allocated to each AP will be the allocation candidate pattern stored in S1005, and the process proceeds to S905 in Fig. 9.

In this manner, the AP 100 searches for a frequency allocation pattern with high throughput by selecting multiple frequency resource allocation patterns and repeating the same determination process. For example, consider a first case where RU#0 is allocated to the AP 100, RU#1 is allocated to the AP 101, and RU#2 and RU#3 are allocated to the AP 102. In this first case, the physical throughput of the AP 100 is 8.6 Mbps, that of the AP 101 is 25.8 Mbps, and that of the AP 102 is 51.6 + 25.8 Mbps. Thus, the total throughput in the first case is 111.8 Mbps. In addition, for example, consider a second case where RU#0 is allocated to the AP 102, RU#1 is allocated to the AP 101, and RU#2 and RU#3 are allocated to the AP 100. In this second case, from the tables in Figs. 8 and 11, the physical throughput of the AP 100 is 8.6 Mbps, that of the AP 101 is 25.8 Mbps, and that of the AP 102 is 8.6 Mbps. Thus, the total throughput in the second case is 43 Mbps. Comparing the total throughput obtained from these two frequency resource allocation patterns and the communication quality, it can be seen that the allocation pattern illustrated in the first case is highly efficient. It becomes possible to select the frequency resource allocation pattern with the highest throughput by attempting to calculate the total throughput of all frequency resource allocation patterns individually.

The method for determining frequency resource allocation described in the present embodiment is an example and is not limited to this method. The determination process can also be performed to satisfy other conditions, for example. For example, the AP 100 can estimate the amount of data that each AP plans to transmit, and can perform a determination process to select a pattern in light of the estimated amount of data and the communication quality information, the pattern enabling each AP to transmit the estimated amount of data.

### (Modification)

The types of communication quality that can be queried via the APCQTF are not limited to those described in the above embodiments. For example, SINR, CINR, and the like can be included in the types of communication quality that can be queried. SINR stands for Signal to Interference plus Noise Ratio. CINR stands for Carrier to Interference and Noise Ratio.

The communication quality information collection process and allocation determination process described in S902 and S903 of Fig. 9 can also be simplified so that the collection and allocation processes are performed at predetermined intervals, such as once every several tens of minutes, to suppress the overloading of communication and computational resources for the communication quality information collection process and allocation determination process. In this case, it is sufficient that the AP 100 issue the APDLTF of S905 in a case where the AP 100 determines that a Coordinated AP needs to be issued, on the basis of the estimated amount of data to be transmitted by each AP, for example. In this case, the AP 100 issues the APDLTF in which the AP RU Allocation Field 712 and STA Info Field 713 in Fig. 7 are omitted. This means that only rough frequency resource allocation is reported to the Coordinated APs. The Coordinated APs that have received the APDLTF autonomously determine which of the STAs under their control is to be assigned an RU of what size within the given frequency resource, on the basis of the amount of data in the data buffer and other factors. Then, it is sufficient that the MU PPDU be transmitted in which data is stored on the basis of the determined RU allocation.

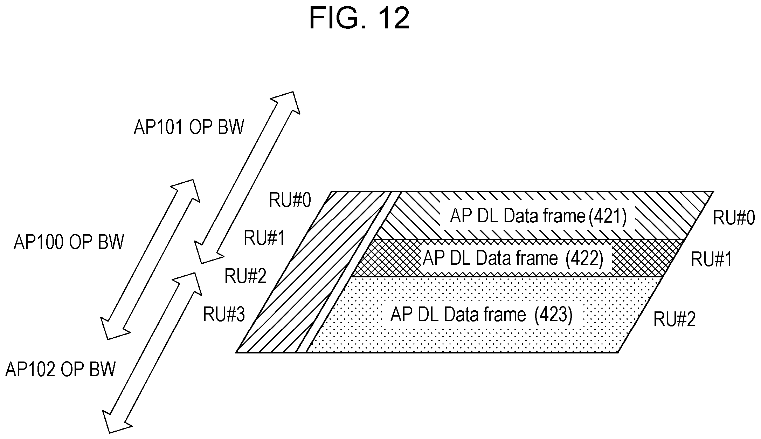

In the above-mentioned embodiment, the case is illustrated in which the Coordinator AP 100 and the Coordinated APs 101 and 102 operate in the same frequency band, but is not limited to this. Each AP can participate in a simultaneous transmission through the Coordinated OFDMA function if a portion of the operating frequency band of the network it provides overlaps. In this case, it is sufficient that the allocation process in Fig. 9 take into account the operating frequency band in which each AP is operating and place constraints on the allocation pattern. This will be briefly described using Fig. 12. Fig. 12 illustrates a case in which the operating frequencies of each AP are different but partially overlap. In this case, for example, the AP 100 attempts not to allocate RU#0 and RU#1 to the Coordinated AP 102. Similarly, the AP 100 attempts not to allocate the RUs that do not match the operating frequency to other Coordinated APs.

Although the above-mentioned embodiment has described the Coordinated OFDMA function for downlink, the present invention can also be applied to the Coordinated OFDMA function for uplink. In this case, each Coordinated AP that has received the APDLTF described using 420 of Fig. 4 and the Coordinator AP 100 generate a Basic Trigger frame that causes uplink MU OFDMA. Subsequently, each AP transmits the generated Basic Trigger frame to the STAs under its control. Hereinafter, the Basic Trigger frame will be also referred to as BTF. In this case, it is sufficient that at the timing when the SIFS time has elapsed after the completion of BTF reception, each STA that has received the BTF be configured to transmit a TB PPDU, in which data is stored in the RU specified by the BTF, to the AP, from which the BTF was transmitted.

The present invention can also be applied to multiple cooperating APs on the basis of Wi-Fi EasyMesh^{®}. In this case, it is sufficient that the Coordinator AP function as a Wi-Fi EasyMesh^{®} controller and that the one or more other cooperating access points function as Wi-Fi EasyMesh^{®} agents.

The disclosure of the present embodiment includes the following configurations.

### (Configuration 1)

An access point device that performs wireless communication in compliance with the IEEE 802.11 standard, including: in communication in which one or more other cooperating access points use Orthogonal Frequency Division Multiple Access (OFDMA) technology based on at least externally collected information, a transmission means that transmits a trigger frame including information indicating a frequency resource to be used for communication with a station to the one or more other cooperating access points,
and
the trigger frame includes information in which identification information that identifies another access point and information indicating a frequency resource to be allocated to the other access point are associated with each other, and the trigger frame allocates a transmission opportunity using a different frequency resource to each of the one or more other cooperating access points.

### (Configuration 2)

The access point device according to Configuration 1, further including: a collection means that collects information regarding communication quality from another cooperating access point, and
the externally collected information includes information collected by the collection means.

### (Configuration 3)

The communication device according to Configuration 2, in which the collection means transmits a query frame for information regarding communication quality to the other cooperating access point and collects information regarding the communication quality by receiving a response to the frame.

### (Configuration 4)

The access point device according to Configuration **3,** in which in the query frame, information causing one or more pieces of information among Received Signal Strength Indicator (RSSI), Signal to Noise Ratio (SNR), Signal to Interference plus Noise Ratio (SINR), Carrier to Noise Ratio (CNR), Carrier to Interference and Noise Ratio (CINR), data rate, MCS, error rate, and communication availability-unavailability information to be query subjects is specified.

### (Configuration 5)

The access point device according to Configuration 4, in which the query frame transmitted by the access point device is a second trigger frame in which information to be a query subject is specified, and at a timing when a predetermined time has elapsed after reception of the trigger frame, the other cooperating access point that has received the second trigger frame transmits a response including data indicating communication quality of a type specified as the query subject as a response to the second trigger frame.

### (Configuration 6)

The access point device according to any one of Configurations 1 to 5, in which the trigger frame includes padding information of a predetermined size to allow the one or more other cooperating access points to use OFDMA technology at an identical timing, and
at a timing when a predetermined time has elapsed after completion of reception of the trigger frame including the padding information, the one or more other cooperating access points communicate using OFDMA technology with a station under control thereof using the frequency resource allocated by the trigger frame.

### (Configuration 7)

The access point device according to any one of Configurations 1 to 6, in which the trigger frame further includes information in which identification information that identifies the access point device and information indicating a frequency resource to be allocated to the access point are associated with each other, and each of the one or more other cooperating access points and the access point are assigned different frequency resources.

### (Configuration 8)

The access point device according to any one of Configurations 1 to 7, in which the access point is a device that functions as a Wi-Fi EasyMesh (a registered trademark) controller, and the one or more other cooperating access points are devices that function as Wi-Fi EasyMesh agents.

### (Configuration 9)

The access point device according to any one of Configurations 1 to 8, in which at a timing when a predetermined time has elapsed after completion of reception of the trigger frame, the one or more other cooperating access points use the frequency resources allocated by the trigger frame to perform communication for transmitting an Ultra High Reliability (UHR) Multi User (MU) PLCP Protocol Data Unit (PPDU) for transmitting downlink data to one or more stations under control thereof.

### (Configuration 10)

A control method for an access point device that performs wireless communication in compliance with the IEEE 802.11 standard, including:
in communication in which one or more other cooperating access points use Orthogonal Frequency Division Multiple Access (OFDMA) technology based on at least externally collected information, a transmission step for transmitting a trigger frame including information indicating a frequency resource to be used for communication with a station to the one or more other cooperating access points,
   and
the trigger frame includes information in which identification information that identifies another access point and information indicating a frequency resource to be allocated to the other access point are associated with each other, and the trigger frame allocates a transmission opportunity using a different frequency resource to each of the one or more other cooperating access points.

### (Configuration 11)

A program for causing a computer to execute the control method for an access point device according to Configuration 10.

### (Other Embodiments)

The present invention can also be realized through processing in which a program that realizes one or more functions of the above-mentioned embodiment is supplied to a system or device via a network or storage medium, and one or more processors in a computer of the system or device read and execute the program. The present invention can also be realized by a circuit (for example, ASIC) that realizes one or more functions.

The invention is not limited to the above-mentioned embodiment, and various changes and modifications are possible without departing from the spirit and scope of the invention. Accordingly, the claims are attached to disclose the scope of the invention to the public.

This application claims the benefit of Japanese Patent Application No. 2022-178313 filed November 7, 2022, which is hereby incorporated by reference herein in its entirety.

## Claims

1. An access point device that performs wireless communication in compliance with the IEEE 802.11 standard, comprising:
in communication in which one or more other cooperating access points use Orthogonal Frequency Division Multiple Access (OFDMA) technology based on at least externally collected information, a transmission means that transmits a trigger frame including information indicating a frequency resource to be used for communication with a station to the one or more other cooperating access points,
wherein
the trigger frame includes information in which identification information that identifies another access point and information indicating a frequency resource to be allocated to the other access point are associated with each other, and the trigger frame allocates a transmission opportunity using a different frequency resource to each of the one or more other cooperating access points.

2. The access point device according to Claim 1, further comprising: a collection means that collects information regarding communication quality from another cooperating access point,
wherein the externally collected information includes information collected by the collection means.

3. The access point device according to Claim 2, wherein the collection means transmits a query frame for information regarding communication quality to the other cooperating access point and collects information regarding the communication quality by receiving a response to the frame.

4. The access point device according to Claim 3, wherein in the query frame, information causing one or more pieces of information among Received Signal Strength Indicator (RSSI), Signal to Noise Ratio (SNR), Signal to Interference plus Noise Ratio (SINR), Carrier to Noise Ratio (CNR), Carrier to Interference and Noise Ratio (CINR), data rate, MCS, error rate, and communication availability-unavailability information to be query subjects is specified.

5. The access point device according to Claim 4, wherein the query frame transmitted by the access point device is a second trigger frame in which information to be a query subject is specified, and at a timing when a predetermined time has elapsed after reception of the trigger frame,
the other cooperating access point that has received the second trigger frame transmits a response including data indicating communication quality of a type specified as the query subject as a response to the second trigger frame.

6. The access point device according to Claim 1, wherein the trigger frame includes padding information of a predetermined size to allow the one or more other cooperating access points to use OFDMA technology at an identical timing, and
at a timing when a predetermined time has elapsed after completion of reception of the trigger frame including the padding information, the one or more other cooperating access points communicate using OFDMA technology with a station under control thereof using the frequency resource allocated by the trigger frame.

7. The access point device according to Claim 1, wherein the trigger frame further includes information in which identification information that identifies the access point device and information indicating a frequency resource to be allocated to the access point are associated with each other, and each of the one or more other cooperating access points and the access point are assigned different frequency resources.

8. The access point device according to Claim 1, wherein the access point is a device that functions as a Wi-Fi EasyMesh (a registered trademark) controller, and the one or more other cooperating access points are devices that function as Wi-Fi EasyMesh agents.

9. The access point device according to any one of Claims 1 to 8, wherein at a timing when a predetermined time has elapsed after completion of reception of the trigger frame, the one or more other cooperating access points use the frequency resources allocated by the trigger frame to perform communication for transmitting an Ultra High Reliability (UHR) Multi User (MU) PLCP Protocol Data Unit (PPDU) for transmitting downlink data to one or more stations under control thereof.

10. A control method for an access point device that performs wireless communication in compliance with the IEEE 802.11 standard, comprising:
in communication in which one or more other cooperating access points use Orthogonal Frequency Division Multiple Access (OFDMA) technology based on at least externally collected information, a transmission step for transmitting a trigger frame including information indicating a frequency resource to be used for communication with a station to the one or more other cooperating access points,
wherein
the trigger frame includes information in which identification information that identifies another access point and information indicating a frequency resource to be allocated to the other access point are associated with each other, and the trigger frame allocates a transmission opportunity using a different frequency resource to each of the one or more other cooperating access points.

11. A program for causing a computer to execute the control method for an access point device according to Claim 10.
